# Europäisches Patentamt
# European Patent Office
# Office européen des brevets

(19)

(11) Veröffentlichungsnummer: **0 096 289**
**B1**

(12) **EUROPÄISCHE PATENTSCHRIFT**

(45) Veröffentlichungstag der Patentschrift:
12.08.87

(21) Anmeldenummer: **83105115.6**

(22) Anmeldetag: **24.05.83**

(51) Int. Cl.⁴: **C 10 G 65/08,** C 10 G 45/48,
B 01 J 23/74

(54) Verfahren zur Herstellung von medizinischen Weissölen durch katalytische Hydrierung und Katalysatoren hierfür.

(30) Priorität: **04.06.82 DE 3221076**

(43) Veröffentlichungstag der Anmeldung:
**21.12.83 Patentblatt 83/51**

(45) Bekanntmachung des Hinweises auf die Patenterteilung:
**12.08.87 Patentblatt 87/33**

(84) Benannte Vertragsstaaten:
**AT BE DE FR GB IT NL**

(56) Entgegenhaltungen:
**EP-A-0 008 424**
**DE-A-1 645 791**
**DE-A-1 792 188**
**DE-A-2 050 908**
**DE-B-2 366 264**
**NL-C-72 053**
**US-A-3 697 445**
**US-A-3 801 705**
**US-A-4 263 127**

(73) Patentinhaber: **BASF Aktiengesellschaft, Carl-Bosch- Strasse 38, D-6700 Ludwigshafen (DE)**

(72) Erfinder: **Broecker, Franz Josef, Dr., Schwanthaler Allee 20, D-6700 Ludwigshafen (DE)**
Erfinder: **Himmel, Walter, Dr., Hardtstrasse 3, D-6701 Fussgoenheim (DE)**
Erfinder: **Durocher, Alain, Dr., Berner Weg 28, D-6700 Ludwigshafen (DE)**
Erfinder: **Boudier, Juergen, Dr., Burgunder Strasse 14, D-6701 Friedelsheim (DE)**
Erfinder: **Schwarzmann, Matthias, Dr., Carl- Bosch-Strasse 54, D-6703 Limburgerhof (DE)**

EP 0 096 289 B1

**Beschreibung**

Die vorliegende Erfindung betrifft ein Verfahren zur Herstellung medizinischer Weißöle durch katalytische Hydrierung und eines geeigneten Katalysators. Hierbei werden rohe bzw. gegebenenfalls solventraffinierte und entparaffinierte Mineralölfraktionen in zwei katalytischen Verfahrensstufen unter Verwendung nickelhaltiger Katalysatoren hydriert.

Weißöle sind stark raffinierte Erdöldestillate, deren Sauerstoff-, Schwefel- und Stickstoffverbindungen weitestgehend abgebaut sind, und die im Falle von technischen Weißölen nur noch geringe Aromatengehalte aufweisen oder im Falle von medizinischen Weißölen von Aromaten praktisch befreit sind. Medizinische Weißöle finden hauptsächlich Anwendung in der pharmazeutischen und Kosmetikindustrie sowie als Schmiermittel für Maschinen im Lebensmittelsektor. Dafür muß das Weißöl geschmacksneutral, geruchlos, farblos und frei von toxischen Substanzen wie Aromaten sein.

Nach älteren Verfahren werden medizinische Weißöle direkt aus Erdölfraktionen oder aus Solventextrakten durch Raffination mit konzentrierter Schwefelsäure bzw. Oleum und anschließende Bleicherdebehandlung hergestellt. Dabei fallen unter Ausbeuteverlusten unerwünschte Mengen an Säureteer an.

Die neuere technologische Entwicklung zielt auf katalytische Verfahren zur Herstellung von Weißölen, die die umständliche und aufwendige Schwefelsäurebehandlung ersetzen. So ist aus DE-OS 16 45 791 ein zweistufiges Verfahren bekannt, bei dem in einer ersten Stufe in Gegenwart eines schwefelfesten Hydrierkatalysators eine aromatenarme Mineralölfraktion erhalten und in elner zweiten Stufe an einem Edelmetallkatalysator aufhydriert wird.

Nach DE-OS 20 50 908 erhält man medizinische Weißöle aus Solventraffinaten in zwei Verfahrensstufen, wobei in der ersten Stufe ebenfalls schwefelfeste Katalysatoren, in der zweiten Stufe komplexe Katalysatoren mit einem Metall der Gruppe VIII des Periodensystems angewandt werden. Dabei ist es notwendig, den Aromatengehalt im Ausgangsstoff für die erste Stufe durch Solventextraktion unter vorzugsweise 5 % zu begrenzen.

In der deutschen Patentschrift DE-PS 2 366 264 wird ebenfalls ein zweistufiges Verfahren zur Herstellung von medizinischen Weißölen beschrieben, bei dem in einer ersten Hydrierstufe ein Nickel, Molybdän und Phosphorsäure enthaltender Katalysator, in der zweiten Hydrierstufe ein Katalysator mit einem zweiwertigen Metall aus der Gruppe Fe, Co, Ni oder Mg und einem dreiwertigen Metall aus der Gruppe Al oder Cr verwendet wird.

Aus der US-Patentschrift 4 263 127 ist ein dreistufiger Weißölprozeß bekannt, bei dem ein Mineralöldestillat in der ersten Stufe unter Hydrocrackbedingungen mit einem schwefelfesten Katalysator und darauf in einer dritten Stufe mit einem ein Edelmetall der Platingruppe enthaltenden Katalysator behandelt wird.

Die wesentliche Aufgabe bei der Herstellung von medizinischen Weißölen ist eine wirksame Erniedrigung des Aromatengehaltes unter einen gesetzlich maximal zulässigen Höchstwert. Hierfür benötigt man vor allem einen hydrieaktiven Katalysator, der bei möglichst tiefen Temperaturen arbeitet. Erhöhte Temperaturen verschieben das thermodynamische Gleichgewicht nach der Seite der Dehydrierung zu Aromaten und verursachen höhere Betriebskosten. Weiterhin treten mit steigender Temperatur unerwünschte Spaltungsreaktionen von Ölbestandteilen in leichtere Produkte auf. Dadurch wird die Qualität des Produktes durch Erniedrigung der Viskosität beeinträchtigt.

Die Erfindung geht aus von einem Verfahren zur Herstellung von medizinischen Weißölen aus Aromaten, Stickstoff-, Sauerstoff- und Schwefelverbindungen enthaltenden Erdölfraktionen mit einem Siedebereich von 200 bis 580°C, die gegebenenfalls einer Solventreaktion unterzogen worden sind, wobei die Mineralölfraktionen zum Abbau der Schwefelverbindungen bis auf einen Restgehalt unter 5 ppm und weitgehender Aromatenhydrierung in einer ersten katalytischen Reaktionsstufe in Gegenwart schwefelfester Katalysatoren bei Drucken von 30 bis 200 bar, Temperaturen von 250 bis 380°C, einem Gas- zu Öl-Verhältnis von 0,1 bis 1,0 m$^3$ Wasserstoff im Normzustand pro kg Öl und einer Katalysatorbelastung von 0,1 bis 5,0 kg Öl pro Liter Katalysator und Stunde behandelt werden, das Produkt dieser ersten Reaktionsstufe nach Abkühlung in eine Gas- und Flüssigphase getrennt wird und die Flüssigphase, gegebenenfalls nach dem Abstrippen leichtsiedender Anteile, in einer zweiten Reaktionsstufe bei Drucken von 100 bis 250 bar, Temperaturen zwischen 150 und 330°C, einem Gas- zu Öl-Verhältnis von 0,1 bis 1,0 m$^3$ Wasserstoff im Normzustand pro kg Öl und einer Katalysatorbelastung von 0,1 bis 1,5 kg Öl pro Liter Katalysator und Stunde an einem Nickel-Siliciumdioxid-Katalysator umgesetzt wird.

Die Erfindung betrifft ein Verfahren dieser Art, bei dem man in der zweiten Hydrierstufe einen Katalysator anwendet, der aus einer Wasserglas, Salpetersäure und Nickelnitrat enthaltenden Lösung mit einem pH-Wert von 1,0 bis 2,0 durch Parallelfällung mit Sodalösung bei elnem pH-Hert von 8,0, Filtrieren, Waschen mit Wasser, Sprühtrocknen, Vermischen des getrockneten Produktes mit 2 bis 10, vorzugsweise 5 Gew.%, mikrokristalliner Cellulose, Kneten unter Zusatz eines Peptisierungsmittels, Verformung zu Strängen, welche einen sternförmigen Querschnitt aufweisen können, Trocknen und anschließende Calzinierung bei Temperaturen von 380 bis 550°C erhalten wird.

Die Erfindung betrifft weiterhin die Verfahren zur Herstellung geeigneter Katalysatoren für die Weißölherstellung.

Geeignete Ausgangsstoffe zur Herstellung von Weißölen medizinischer Qualität nach dem erfindungsgemäßen Verfahren sind Öle mit einem Siedebereich zwischen 200 und 580°C, wie z.B. Gasölfraktionen mit einem Siedebereich von 220 bis 350°C, Spindelöl- oder Schmierölfraktionen.

Höhersiedende Ausgangsprodukte erfordern dabei im allgemeinen schärfere Raffinationsbedingungen.

In besonderen Fällen, wenn der Aromatengehalt des Rohstoffs z.B. über 30 % liegt, kann auch eine Solventextraktion zur Erniedrigung des Aromatengehaltes vorgeschaltet werden. Die aus dieser Behandlungsstufe gewonnenen paraffinhaltigen Raffinate können noch zur Verbesserung des Kälteverhaltens einer Lösungsmittelentparaffinierung unterworfen werden. In einer ersten Reaktionsstufe werden dann neben dem Abbau stickstoff- und schwefelhaltiger Verbindungen die Aromaten so weitgehend hydriert, daß technische Weißöle anfallen, die hinsichtlich Farbstabilität und Aromatengehalt den entsprechenden Spezifikationen genügen. Falls erforderlich, werden in einer nachgeschalteten Stabilisierungskolonne durch Abtrennen der Spaltprodukte Viskosität und Flammpunkt eines technischen Weißöles eingestellt.

Für diese erste Hydrierstufe kann man einen sulfidierten Katalysator verwenden, der im oxidischen Zustand, bezogen auf das Katalysatorgewicht, 3 bis 6 % Nickeloxid, 10 bis 20 % Molybdänoxid und 3 bis 6 % Phosphorsäure auf einem Träger, vorzugsweise -Aluminiumoxid, enthält. Der Träger kann bis zu 5 Gew.% $SiO_2$ enthalten. Vorteilhaft verwendet man in der ersten Hydrierstufe einen Katalysator, der sich von den üblichen Hydrierkatalysatoren durch die Herstellungsmethode unterscheidet. Die Cobalt/Molybdän und/oder Nickel/Molybdän und/oder Nickel/Wolfram enthaltenden Katalysatoren werden durch die Tränkung mit einer phosphorsauren Nickel- und/oder Cobaltmolybdänlösung erhalten. Dieser Katalysator hat den Vorteil gegenüber herkömmlichen Katalysatoren, bei der Raffination der Vorprodukte für die Herstellung medizinischer Weißöle bei gleichem Entschwefelungsgrad wesentlich besser Aromaten zu hydrieren.

Das erfindungsgemäße Zweistufen-Verfahren hat auch den Vorteil, daß man nach der ersten Hydrierstufe bereits Öle erhält, die als technische Weißöle verwendet werden können. Zum anderen werden in der ersten Stufe Öle erhalten, deren geringer Restschwefelgehalt in der zweiten Hydrierstufe die Verwendung eines schwefelempfindlichen, hoch hydrieraktiven Nickelkatalysators bei tieferen Reaktionstemperaturen erlauben, um die Restaromaten zu hydrieren. Durch Anwendung tieferer Temperaturen in der zweiten Stufe wird eine bessere Wirtschaftlichkeit des Gesamtverfahrens erreicht und eine Spaltung von Ölbestandteilen weitgehend unterbunden, so daß eine Strippung zur Verbesserung der Viskosität und zur Erhöhung des Flammpunktes nicht erforderlich ist.

In der zweiter Hydrierstufe wird vorteilhaft ein Katalysator verwendet, der 30 bis 50 Gew.% Nickel auf Siliciumdioxid, bezogen auf den oxidischen Katalysator, enthält. Zur Herstellung dieses Katalysators wird durch Parallelfällung bei 60°C aus einer wäßrigen Lösung von Wasserglas, Salpetersäure und Nickelnitrat mit einer 3-molaren wäßrigen Sodalösung bei einem pH-Wert von 8,0 ein Niederschlag gefällt, abfiltriert, mit Wasser nitratfrei gewaschen und sprühgetrocknet. Das erhaltene Sprühgut wird dann mit 2 bis 10 Gew.% mikrokristalliner Cellulose und einem Peptisierungsmittel wie beispielsweise wäßrige Salpetersäure versetzt und in einem Kneter solange geknetet, bis eine verformbare Masse entstanden ist. Die Knetmasse wird dann zu Strangpreßlingen verformt, bei 110°C getrocknet und anschließend bei Temperaturen zwischen 400 und 500°C calciniert, so daß der erhaltene Katalysator einen Glühverlust (2 h bei 900°C) von 2 bis 12 Gew.%, vorzugsweise 4 bis 8 Gew.% besitzt. Der so hergestellte erfindungsgemäße Katalysator zeichnet sich dadurch aus, daß er eine spezifische Oberfläche nach BET von 250 bis 550 $m^2/g$, vorzugsweise 300 bis 400 $m^2/g$ und ein Porenvolumen, gemessen durch Quecksilberporosimetrie, im Bereich zwischen 1,7 und 50 000 nm Porenradius von 0,20 bis 0,60 $cm^3/g$, insbesondere von 0,3 bis 0,5 $cm^3/g$ besitzt, wobei 60 bis 90 % des Porenvolumens im Bereich zwischen 10 und 100 nm Porenradius liegen. Die relativ hohe spezifische Oberfläche in Verbindung mit der charakteristischen Porenverteilung bewirkt, daß der erfindungsgemäße Katalysator bei der Aromatenhydrierung eine größere Aktivität und Lebensdauer besitzt als vergleichbare bekannte Katalysatoren.

Nach Durchgang der Öle durch die zweite Reaktionsstufe erhält man farb-, geschmack- und geruchlose medizinische Weißöle, die fast vollständig entaromatisiert sind und als Paraffina liquida den Vorschriften des Deutschen Arzneibuches (DAB 8) entsprechen.

**Beispiel 1**

Zur Herstellung eines medizinischen Weißöles wird eine Mineralölfraktion mit einem Siedebereich von 390 bis 550°C, einer Dichte von 0,875 g/ml (20°C), einer Viskosität von 54,54 $mm^2/s$ (50°C), einem Schwefelgehalt von 0,32 Gew.% und einem Aromatengehalt von 15,7 Gew.% eingesetzt. Dieses Öl wird in der ersten Stufe in Gegenwart eines geschwefelten, phosphorsäurehaltigen NiMo-Katalysators hydriert. Der Katalysator wird durch Tränken von -Aluminiumoxid-Strangpreßlingen mit phosphorsaurer Nickel-Molybdän-Lösung, wie zum Beispiel in DE-PS 2 366 264 beschrieben, hergestellt und enthält 5 % NiO, 13 % $MoO_3$ und 4 % $H_3PO_4$.

Aus dieser Mineralölfraktion wird bei einer mittleren Reaktortemperatur von 365°C, einem Druck von 95 bar, einem Durchsatz von 0,25 kg/l Katalysator . h und einem $H_2$/Öl-Verhältnis von 0,4 $m^3$ Wasserstoff im Normzustand pro kg Öl nach Abstrippen der leichten Anteile ein technisches Weißöl mit folgenden Eigenschaften erhalten:

| | |
|---|---|
| Siedebereich: | 385 bis 550°C |
| Dichte (20°C): | 0,864 g/ml |
| Viskosität (50°C): | 45,20 $mm^2/S$ |
| Schwefel: | 2 mg/kg |

3

Lichtabsorption nach DAB 8:

| | |
|---|---|
| 275 nm: | 87 |
| 295 nm: | 141 |
| 300 nm: | 121 |

In einer zweiten Hydrierstufe wird an einem Nickelkatalysator technisches Weißöl bei einem Druck von 200 bar, einer Temperatur von 220°C, einem Durchsatz von 0,2 kg/l Katalysator . h und einem $H_2$/Öl-Verhältnis von 0,4 m$^3$ Wasserstoff im Normzustand pro kg Öl behandelt.

In nachfolgender Tabelle 1 sind die Lichtabsorptionswerte nach DAB 8 als Maß für den Restaromatengehalt für verschiedene, nachfolgend beschriebene Katalysatoren für zwei Einsatzöle (technische Weißöle) dargestellt:

**Tabelle 1**

| | Technisches Weißöl 1 | Raffinate 1 | | | | Technisches Weißöl 2 | Raffinate 2 | | |
|---|---|---|---|---|---|---|---|---|---|
| Katalysator | | A | B | C | D | | A | D | D |
| Reaktionstemperatur °C | | 220 | 220 | 220 | 220 | | 220 | 220 | 240 |
| Lichtabsorption nach DAB 8 | | | | | | | | | |
| 275 nm (Limit 0,8) | 87 | 0,08 | 0,18 | 0,53 | 0,53 | 103 | 0,16 | 1,10 | 0,77 |
| 295 nm (Limit 0,4) | 141 | 0,05 | 0,11 | 0,49 | 0,16 | 160 | 0,08 | 0,26 | 0,20 |
| 300 nm (Limit 0,3) | 121 | 0,03 | 0,09 | 0,39 | 0,08 | 137 | 0,06 | 0,21 | 0,14 |

Die Ergebnisse zeigen, daß mit Katalysator C bei dem leichter zu hydrierenden technischen Weißöl 1 kein spezifikationsgerechtes medizinisches Weißöl erhalten wird. Mit den erfindungsgemäßen Katalysatoren A und B werden dank der besonders guten Hydrieraktivität aus technischem Weißöl 1 und dem schwerer hydrierbaren technischen Weißöl 2 jeweils medizinisches Weißöl hergestellt, daß die DAB 8-Anforderungen weit unterschreitet. Mit dem herkömmlichen Katalysator D wird medizinisches Weißöl bei 220°C nur aus dem leichteren technischen Weißöl 1 gewonnen, allerdings mit höheren Lichtabsorptionswerten als mit den erfindungsgemäßen Katalysatoren, während das Weißöl aus dem schwerer hydrierbaren technischen Weißöl 2 nicht den DAB 8-Anforderungen genügt. Mit steigender Reaktionstemperatur nehmen die Lichtabsorptionswerte ab. Demnach wird aus dem technischen Weißöl 2 mit Katalysator D erst bei einer höheren Temperatur von 240°C medizinisches Weißöl erhalten. Mit Katalysator A wurde die DAB 8-Spezifikation bei tieferer Temperatur erreicht.

**Beispiel 2**

Herstellung der Katalysatoren
Katalysator A (erfindungsgemäß):
Zur Herstellung des Katalysators werden zwei Lösungen benötigt:
Lösung 1
46,56 kg Wasserglas (24,8 Gew.% $SiO_2$) werden in 265 l Wasser gelöst. Diese Lösung wird in 2,5 Stunden unter Rühren in eine $HNO_3$-Lösung geleitet, die aus 10,30 l konz. $HNO_3$ und 7 l $H_2O$ besteht. Man erhält dann eine Lösung, die einen pH-Wert von 1,5 besitzt. Bei Raumtemperatur werden dann zu dieser Lösung 98 kg Nickelnitratlösung (13,5 Gew.% Ni) beigemischt.
Lösung 2
47,70 kg technische Soda werden bei 40°C in 150 l Wasser gelöst. Man erhält eine 3-molare Sodalösung.
Die Fällung erfolgt durch parallelen Zulauf der beiden Lösungen in einen Rührkessel. Dabei wird die Temperatur auf 60°C gehalten. Durch Regulierung der Zulaufgeschwindigkeiten wird der pH-Wert während der Fällung auf 8,0 gehalten. Die Fällung wird dann in einer Bütte 30 Minuten nachgerührt, abfiltriert und mit Wasser nitratfrei gewaschen.
Der erhaltene Filterkuchen mit einem Wassergehalt von 70 bis 85 Gew.% wird im Sprühturm getrocknet, so daß ein Sprühgut mit einem Glühverlust von etwa 30 Gew.% entsteht. 25 kg dieses Sprühgutes werden mit 1,25 kg mikrokristalliner Cellulose in einem Kneter 5 Minuten trocken vermischt. Dazu gibt man dann eine Lösung aus 14,0 l Wasser und 1,0 l $HNO_3$ (65 Gew.% $HNO_3$). Das Gemenge wird solange geknetet, bis eine verstrangbare Knetmasse entstanden ist. Die erhaltene Paste wird direkt zu Strängen verformt. Die Strangpreßlinge werden bei 110°C getrocknet und anschließend bei Temperaturen zwischen 400 und 500°C bis auf einen Glühverlust (2 h bei 900°C) von 5 Gew.% calciniert. Der fertige Katalysator enthält 56 Gew.% NiO. Der Katalysator besitzt folgende Eigenschaften:

| | |
|---|---|
| Spez. Oberfläche (BET): | 343 m²/g |
| Porenvolumen zwischen 1,7 und 50 000 nm Porenradius: | 0,336 cm³/g |
| zwischen 10 und 100 nm Porenradius: | 81 % des Gesamtporenvolumens |

Katalysator B (erfindungsgemäß):
Herstellung wie Katalysator A, jedoch mit einem niedrigeren NiO-Gehalt von 40 Gew.%.
Katalysator C (Vergleich):
Herstellung wie Katalysator B, jedoch ohne Verwendung von mikrokristalliner Cellulose.
Katalysator D (Vergleich):
Katalysator D wurde, wie in DE-PS 2 366 264 beschrieben, mit einem NiO-Gehalt von 56 Gew.% hergestellt.
In Tabelle 2 sind die charakteristischen Daten der Katalysatoren dargestellt.

**Tabelle 2**

Katalysatoreigenschaften

| Katalysator | A | B | C | D |
|---|---|---|---|---|
| NiO-Gehalt (Gew.%) | 56 | 40 | 40 | 56 |
| Cellulose-Zusatz (Gew.-%) | 5 | 5 | - | - |
| Schüttgewicht (kg/m³ | 740 | 600 | 650 | 1050 |

**Patentansprüche**

1. Verfahren zur Herstellung von medizinischen Weißölen aus Aromaten, Stickstoff-, Sauerstoff- und Schwefelverbindungen enthaltenden Erdölfraktionen mit einem Siedebereich von 200 bis 500°C, die gegebenenfalls einer Solventextraktion unterzogen worden sind, wobei die Mineralölfraktionen zum Abbau der Schwefelverbindungen bis auf einen Restgehalt unter 5 ppm und weitgehender Aromatenhydrierung in einer ersten katalytischen Reaktionsstufe in Gegenwart schwefelfester Katalysatoren bei Drucken von 30 bis 200 bar, Temperaturen von 250 bis 350°C, einem Gas- zu Öl-Verhältnis von 0,1 bis 1,0 m³ Wasserstoff im Normzustand pro kg Öl und einer Katalysatorbelastung von 0,1 bis 5,0 kg Öl pro Liter Katalysator und Stunde behandelt werden, das Produkt dieser ersten Reaktionsstufe nach Abkühlung in eine Gas- und Flüssigphase getrennt wird und die Flüssigphase gegebenenfalls nach dem Abstrippen leichtsiedender Anteile in einer zweiten Reaktionsstufe bei Drucken von 100 bis 250 bar, Temperaturen zwischen 150 und 330°C, einem Gas- zu Öl-Verhältnis von 0,1 bis 1,0 m³ Wasserstoff im Normzustand pro kg Öl und einer Katalysatorbelastung von 0,1 bis 1,5 kg Öl pro Liter Katalysator und Stunde an einem Nickel-Siliciumdioxid-Katalysator umsetzt, dadurch gekennzeichnet, daß man einen Nickel-Siliciumdioxid-Katalysator in der zweiten Hydrierstufe anwendet, der aus einer Wasserglas, Salpetersäure und Nickelnitrat enthaltenden Lösung mit einem pH-Wert von 1,0 bis 2,0 durch Parallelfällung mit Sodalösung bei einem pH-Wert von 8,0, Abfiltrieren, Waschen mit Wasser und Sprühtrocknen, Vermischen des getrockneten Produktes mit 2 bis 10, vorzugsweise 5 Gew.%, mikrokristalliner Cellulose, Kneten unter Zusatz eines Peptisierungsmittels, Verformung zu Strängen, Trocknen und anschließende Calcinierung bei Temperaturen von 380 bis 550°C erhalten wird.

2. Verfahren nach Anspruch 1, dadurch gekennzeichnet, daß man einen Nickel-Siliciumdioxid-Katalysator mit einer spezifischen Oberfläche nach BET von 250 bis 550 m²/g, vorzugsweise 300 bis 400 m²/g und einem Porenvolumen im Bereich zwischen 1,7 und 50 000 nm Porenradius von 0,20 bis 0,60 cm³/g, insbesondere von 0,3 bis 0,5 cm³/g verwendet, mit der Maßgabe, daß 60 bis 90 % des Porenvolumens im Bereich zwischen 10 und 100 nm Porenradius liegen.

3. Verfahren nach Anspruch 1 und 2, dadurch gekennzeichnet, daß man Katalysator-Strangpreßlinge mit sternförmigem Querschnitt verwendet.

4. Verfahren zur Herstellung von Hydrierkatalysatoren vorzugsweise mit sternförmigem Querschnitt, dadurch gekennzeichnet, daß diese aus einer Wasserglas, Salpetersäure und Nickelnitrat enthaltenden Lösung mit einem pH-Wert von 1,0 bis 2,0 durch Parallelfällung mit Sodalösung bei einem pH-Wert von 8,0, Abfiltrieren, Waschen mit Wasser und Sprühtrocknen Vermischen des getrockneten Produktes mit 2 bis 10, vorzugsweise 5 Gew.%, mikrokristalliner Cellulose, Kneten unter Zusatz eines Peptisierungsmittels, Verformung zu Strängen, Trocknen und anschließende Calcinierung bei Temperaturen von 380 bis 550°C erhalten werden.

**Claims**

1. A process for the production of medicinal white oils from petroleum fractions which have a boiling point range of from 200 to 580°C, contain aromatics and nitrogen, oxygen and sulphur compounds, and may have been subjected to a solvent distillation, in which the mineral oil fractions have been treated in a first catalytic reaction stage in the presence of sulphur-resistant catalysts under a pressure of from 30 to 200 bars and at a temperature of from 250 to 380°C, a gas-to-oil ratio of from 0.1 to 1.0 m$^3$ (S.T.P.) of hydrogen per kg of oil, and a weight-space velocity of from 0.1 to 5.0 kg of oil/litre of catalyst/hr, in order to remove the sulphur compounds down to a residual content of less than 5 ppm, and to substantially hydrogenate the aromatics; the product obtained in this first reaction stage, after cooling, is separated into a gaseous and a liquid phase; and the liquid phase, after optionally stripping off the low-boilers, is reacted in a second stage under a pressure of from 100 to 250 bars and at a temperature of from 150 to 330°C, a gas-to-oil ratio of from 0.1 to 1.0 m$^3$ (S.T.P.) of hydrogen per kg of oil, and a weight-space velocity of from 0.1 to 1.5 kg of oil/litre of catalyst/hr, over a nickel/silica catalyst, characterized in that there is used in the second hydrogenation stage a nickel/silica catalyst which has been obtained from a solution containing sodium silicate, nitric acid and nickel nitrate and having a pH of from 1.0 to 2.0 by coprecipitation with sodium carbonate solution at a pH of 8.0, filtration, washing with water and spray-drying, mixing the dried product with from 2 to 10, preferably 5, % by weight of microcrystalline cellulose, kneading the mixture, with the addition of a peptizing agent, shaping into strands, drying and subsequent calcination at a temperature of from 380 to 550°C.

2. A process as claimed in claim 1, characterized in that a nickel/silica catalyst is used which has a BET specific surface area of from 250 to 550 m$^2$/g, preferably from 300 to 400 m$^2$/g, and a pore volume - where the pore radius ranges from 1.7 to 50,000 nm - of from 0.20 to 0.60 cm$^3$/g, particularly from 0.3 to 0.5 cm$^3$/g, with the proviso that 60 to 90% of the pore volume has a pore radius of from 10 to 100 nm.

3. A process as claimed in claims 1 and 2, characterized in that catalyst extrudates having a star-shaped cross-section are used.

4. A process for the production of a hydrogenation catalyst preferably having a star-shaped cross-section, characterized in that the catalyst is obtained from a solution containing sodium silicate, nitric acid and nickel nitrate and having a pH of from 1.0 to 2.0 by coprecipitation with sodium carbonate solution at a pH of 8.0, filtration, washing with water and spray-drying, mixing the dried product with from 2 to 10, preferably 5, % by weight of microcrystalline cellulose, kneading the mixture, with the addition of a peptizing agent, shaping into strands, drying and subsequent calcination at a temperature of from 380 to 550°C.

**Revendications**

1. Procédé pour la preparation d'huiles blanches médicinales à partir de fractions de pétrole contenant des carbures aromatiques, des composés azotés, oxygénés et soufrés, fractions dont la gamme d'ébullition se situe entre 200 et 580°C et qui ont été éventuellement soumises à une extraction au solvant, les fractions d'hule minérale étant traitées, en vue de la décomposition des composés soufrés jusqu'à une teneur résiduelle de moins de 5 ppm et de l'hydrogénation poussée des carbures aromatiques, dans un premier stade réactionnel catalytique en présence de catalyseurs résistants au soufre, sous des pressions de 30 à 200 bars, à des températures de 250 à 380°C, avec un rapport du gaz à l'huile de 0,1 à 1,0 m$^3$ d'hydrogène dans les conditions normales par kg d'huile et avec une charge du catalyseur de 0,1 à 5,0 kg d'huile par litre de catalyseur et par heure, le produit de ce premier stade réactionnel étant séparé, après refroidissement, en une phase gazeuse et une phase liquide et la phase liquide, éventuellement après l'enlèvement par strippage des fractions de bas point d'ébullition, étant mise en réaction en présence d'un catalyseur de nickel-bioxyde de silicium, dans un second stade réactionnel, sous des pressions de 100 à 250 bars, à des températures comprises entre 150 et 330°C, avec un rapport du gaz à l'huile de 0,1 à 1,0 m$^3$ d'hydrogène dans les conditions normales par kg d'huile et avec une charge du catalyseur de 0,1 à 1,5 kg d'huile par litre de catalyseur et par heure, caractérisé en ce qu'on utilise, dans le second stade d'hydrogenation, un catalyseur de nickel-bioxyde de silicium qui est obtenu à partir d'une solution contenant un verre soluble, de l'acide nitrique et du nitrate de nickel et ayant un pH de 1,0 à 2,0, par precipitation parallèle avec une solution de carbonate de sodium à un pH de 8,0, filtration, lavage à l'eau, sechage par pulvérisation, mélange du produit séché avec 2 à 10, de préférence 5 % en poids de cellulose microcristalline, malaxage avec addition d'un agent de peptinisation, transformation en bâtonnets extrudés, séchage, puis calcination à des températures de 380 à 550°C.

2. Procédé selon la revendication 1, caractérisé en ce qu'on utilise un catalyseur de nickel-bioxyde de silicium qui a une surface spécifique, déterminée par la méthode BET, de 250 à 550 m$^2$/g, de préférence de 300 à 400 m$^2$/g et un volume de pores, dans la gamme comprise entre 1,7 et 50 000 nm de rayon de pores, de 0,20 à 0,60 cm$^3$/g, en particulier de 0,3 à 0,5 cm$^3$/g, avec cette condition que 60 à 90 % du volume de pores se situent dans la gamme comprise entre 10 et 100 nm de rayon de pores.

3. Procédé selon la revendication 1 ou 2, caractérisé en ce qu'on utilise des bâtonnets extrudés de catalyseur à section étoilée.

4. Procédé pour la préparation de catalyseurs d'hydrogénation ayant de préférence une section étoilée, caractérisé en ce qu'ils sont obtenus à partir d'une solution contenant de silicate de sodium (verre soluble), de l'acide nitrique et du nitrate de nickel et ayant un pH de 1,0 à 2,0, par précipitation parallèle avec une solution de carbonate de sodium à un pH de 8,0, filtration, lavage à l'eau et séchage par pulvérisation, mélange du produit séché avec 2 à 10, de préférence 5 % en poids de cellulose microcristalline, malaxage avec addition d'un agent de peptinisation, transformation en bâtonnets extrudés, séchage, puis calcination à des températures de 380 à 550° C.